(19) Europäisches Patentamt
European Patent Office
Office européen des brevets

(11) EP 1 577 810 A1

(12) EUROPEAN PATENT APPLICATION

(43) Date of publication:
21.09.2005 Bulletin 2005/38

(51) Int Cl.⁷: **G06F 17/60**, G06K 7/08

(21) Application number: 05004744.8

(22) Date of filing: 03.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 05.03.2004 JP 2004063005

(71) Applicant: **NTT DoCoMo, Inc.**
**Tokyo 100-6150 (JP)**

(72) Inventors:
• **Yamada, Naoharu Int. Prop. Dept.**
**NTT DoCoMo, Inc.**
**Chiyoda-ku Tokyo 100-6150 (JP)**

• **Sakamoto, Kenji Int. Prop. Dept.**
**NTT DoCoMo, Inc.**
**Chiyoda-ku Tokyo 100-6150 (JP)**
• **Kunito, Goro Int. Prop. Dept. NTT DoCoMo, Inc.**
**Chiyoda-ku Tokyo 100-6150 (JP)**
• **Yamazaki, Kenichi Int. Prop. Dept**
**NTT DoCoMo, Inc.**
**Chiyoda-ku Tokyo 100-6150 (JP)**

(74) Representative: **Grosse, Wolfgang et al**
**Patent- & Rechtsanwälte**
**Grosse, Bockhorni & Schumacher,**
**Forstenrieder Allee 59**
**81476 München (DE)**

(54) **Place management apparatus and place management method**

(57) As an embodiment of the present invention, a place management system reads attributes of commodities from RFID-tags attached to the respective commodities located in a spatial area of a predetermined place, and determines an attribute of the place from the attributes read. The place management system is also able to store attribute inference rule information for determining the attribute of the place from the attribute in-formation of commodities and to determine the attribute of the place on the basis of the attribute inference rule information from the attributes of the commodities recognized. Furthermore, the place management system has a place movement determiner for determining a movement of a place, and the place movement determiner is able to appropriately determine the movement when the place moves.

*Fig.3*

**Description**

BACKGROUND OF THE INVENTION

Field of the Invention

The present invention relates to a place management apparatus and a place management method capable of automatically managing places with RFID-tags attached to things owned by a user, commodities at a salesplace of a store, or the like.

Related Background Art

There is a conventionally developed technology of specifying a location of a moving user by use of GPS, various sensors, or the like and supporting development of an application associated with the location. An example of the location-dependent application development supporting technology is the technology described in Document "N. Davies, H. Cheverst, K. Mitchell, and A. Efrat, "Using and determining location in a context-sensitive tour guide", IEEE Computer, (USA), Vol 34, No. 8, p.35-41". The technology described in this Document enables hypertext links according to a specific place, e.g., an existing location such as a gallery or a cafe. This technology allows a user to enjoy services according to his or her location.

In addition, the technology described in Japanese Patent Application Laid-Open No. 2002-83369 is a technology of attaching RFID-tags to commodities and appropriately performing management of commodities. This patent application describes easy implementation of management of freshness of commodities or change of commodity prices by properly changing commodity information stored in the RFID-tags.

SUMMARY OF THE INVENTION

There exist spaces meaningful to us in the real world where we live. For example, there are salesplaces of shops, working places, and so on. Such spaces meaningful to people will be called "places" herein. The places are characterized in that they are generated or eliminated by some event or by some change in the real world. For example, where a salesperson puts discount seals on commodities at a fresh food salesplace, a discount salesplace is generated there. Where a salesperson peels off the discount seals or where discounted commodities are sold out, the discount salesplace becomes extinct.

A seat consisting of a desk and a chair in a company is a workplace of a certain user, but the workplace is not fixed to the seat. Namely, for having preliminary discussions with someone, the user moves to a meeting corner, and then that place becomes a workplace. Therefore, the places always change.

As described above, "places" are determined by people, based on subjective information of people, environments around the places, and things placed in the places, and the management thereof is directly performed by people. There were also cases where no management was performed. For example, employees put labels on signboards or panels set at a salesplace of a shop by hand and peel off them, thereby to perform management so as to specify that place. In the foregoing workplace, no one performed management regardless of where the workplace was.

Since the management was manually performed using the subjective information of people, environments around places, and things placed in the places as described above, the management took some time and labor, and even if a user desired to automatically receive a service corresponding to a place, the user was not allowed to receive such a service.

An object of the present invention is therefore to solve the above problem and to provide a place management apparatus and a place management method capable of such control as to automatically perform management of places.

A place management apparatus of the present invention comprises thing attribute storing means for storing attribute information and an RFID-tag ID of each thing in correspondence; reception controlling means for receiving IDs of RFID-tags attached to respective things located in a spatial area of a predetermined place; and attribute determining means for determining an attribute of the place on the basis of the RFID-tag IDs received by the reception controlling means and the attribute information and the RFID-tag ID of each thing stored in the storing means.

A place management method of the present invention comprises a receiving step of receiving IDs of RFID-tags attached to respective things located in a spatial area of a predetermined place; a reading step of reading attribute information and an RFID-tag ID of each thing stored in correspondence in storing means, out of the storing means; and an attribute determining step of determining an attribute of the place on the basis of the received RFID-tag IDs and the attribute information and the RFID-tag ID read out.

The above-described configuration of the present invention involves determining the attribute of the place according to the attribute information of the thing which corresponds to ID of the RFID-tag attached to the thing; this permits management by automatically grasping the attribute of the place (e.g., a fresh fish salesplace, a discount corner, a workplace, or the like), without need for manual management of the attribute of the place.

The place management apparatus of the present invention also has a configuration further comprising attribute inference rule information storing means for storing attribute inference rule information for determining the attribute of the place from the thing attribute information, wherein the attribute determining means determines the attribute of the place, using the thing attribute information stored in the thing attribute storing means and the attribute inference rule information stored in the attribute inference rule information storing means.

In the above-described configuration of the present invention, the appropriate rule for determination of the attribute of the place is prepared using the attribute inference rule information, whereby it is feasible to implement finely-tuned control for determination of the attribute.

Furthermore, the place management apparatus of the present invention comprises place attribute information storing means for storing the attribute information of the place; and updating means for comparing the attribute information of the place stored in the place attribute information storing means with current place attribute information received by the reception controlling means and for updating the place attribute information stored in the place attribute information storing means if it can be determined that there was a change in the attribute of the place.

The above-described configuration of the present invention involves storing the place attribute information and properly updating it even with a change in the attribute of the place, whereby the management of place attribute can be appropriately performed.

In addition, the place management apparatus of the present invention has a configuration wherein the updating means determines that there was a change in the attribute of the place, if there is a change in the RFID-tags located in the spatial area of the place, received by the reception controlling means, or if there is a change in attributes of the things stored in the RFID-tags.

In the above-described configuration of the present invention, if there is a change in the RFID-tags existing in the spatial area of the place or if there is a change in the attributes of the things stored in the RFID-tags, the attribute of the place is changed to update the place attribute information storing means storing the appropriate attribute of the place, whereby finely-tuned management of the place can be performed.

The place management apparatus of the present invention can also be arranged so that the attribute determining means detects a commonality among attributes of things stored in the thing attribute information storing means, thereby determining the attribute of the place.

The above-described configuration of the present invention involves finding a commonality among attributes of things and thereby determining the attribute of the place, whereby the appropriate attribute of the place can be determined.

The place management apparatus of the present invention comprises place movement determining means for determining a movement of a thing from a predetermined place to another place, based on the RFID-tag IDs received by the reception controlling means.

The above-described configuration of the present invention involves detecting a movement of a thing and occurrence of a change in the attribute of the place, based on the information stored in the storing means, whereby it is feasible to determine the movement of the place and to perform appropriate management of the place.

The place management apparatus of the present invention has a configuration further comprising place history storing means for storing attribute information of a previously extinct place, wherein the place movement determining means further determines that there was a movement of the place, if the place movement determining means determines that there was coincidence between the RFID-tag IDs received by the reception controlling means and RFID-tag IDs in the attribute information of the place stored in the place history storing means.

The above-described configuration of the present invention involves storing the attribute information (including the RFID-tag IDs) of the previously extinct place, whereby the movement of the place can be appropriately determined.

The place management apparatus of the present invention further comprises attribute inference rule learning means for automatically generating a place attribute inference rule by learning from a combination of the attribute information of each thing located in the spatial area of the predetermined place and the attribute information of the place.

The above-described configuration of the present invention permits the inference rule for inferring the attribute information of the place from the thing attribute information, to be automatically generated, whereby it is feasible to reduce such a complicated work as manual generation of the inference rule.

The place management apparatus of the present invention is arranged so that the attribute inference rule learning means specifies a relationship between attribute information of each thing and the attribute information of the place by learning.

The above-described configuration of the present invention permits the attribute information of the place to be automatically inferred from the thing attribute information, using the relationship between the attribute information of each thing and the attribute information of the place.

Furthermore, the place management apparatus of the present invention is arranged so that the attribute de-

# EP 1 577 810 A1

termining means determines an attribute of a place with a highest relationship with a thing set consisting of the things, using the relationship specified by the attribute inference rule learning means.

The above-described configuration of the present invention permits the attribute of the place to be automatically specified from the relationship between the attribute of each thing and the attribute of the place.

Furthermore, the place management apparatus of the present invention is arranged so that the thing attribute storing means stores an ontology to define a relation between terms described as the thing attribute information.

The above-described configuration of the present invention permits different attributes of multiple things to be grouped into an identical attribute, based on the relation between terms by the ontology.

As described above, the present invention involves determining the attribute of the place according to the attribute information of the thing which corresponds to ID of the RFID-tag attached to the thing, whereby it is feasible to automatically grasp the attribute of the place (e.g., a fresh fish salesplace, a discount corner, a workplace, or the like) and to perform the management, without need for the manual management of the attribute of the place.

## BRIEF DESCRIPTION OF THE DRAWINGS

Fig. 1 is an illustration to illustrate a concept of "place".

Fig. 2 is an illustration to illustrate a concept of movement of "place".

Fig. 3 is a block diagram of a place management system.

Fig. 4 is an illustration to illustrate a concept of determination that there was a change in attributes of places.

Fig. 5 is an operation flowchart showing an operation of the place management system in registering commodity attribute information corresponding to RFID-tag IDs.

Fig. 6 is an operation flowchart of the place management system in registering a corresponding reader ID in place attribute information.

Fig. 7 is an operation flowchart of the place management system to perform processes from a registration process to processes of movement and extinction of a place.

Fig. 8 is an illustration to illustrate information stored in commodity attribute information storage 51.

Fig. 9 is an illustration where corresponding reader IDs are registered in place attribute information registered in place attribute information storage 53.

Fig. 10 is an illustration where constitutive thing IDs are registered in place attribute information registered in place attribute information storage 53.

Fig. 11 is an illustration where an associated service is registered in place attribute information registered in place attribute information storage 53.

Fig. 12 is an illustration to illustrate history information recorded in place history storage 54.

Fig. 13 is an illustration where there occurred a movement of a place in place attribute information registered in place attribute information storage 53.

Fig. 14 is an operation sequence diagram in executing registration processes of commodity attribute information and place attribute information, and a place generation process.

Fig. 15 is an operation sequence diagram in executing a place movement process.

Fig. 16 is an operation sequence diagram in executing a place extinction process.

Fig. 17 is an illustration showing another example of place attribute information.

Fig. 18 is an illustration showing contents of relationships between attributes of things and attributes of places.

Fig. 19 is an example of an ontology stored in commodity attribute information storage 51.

Fig. 20 is an example of thing attribute information using the ontology.

Fig. 21 is an example of attributes of terms defined in the ontology.

## DESCRIPTION OF THE PREFERRED EMBODIMENTS

First, the "place" and the outline of the present invention will be described. The "place" in the present invention is defined as a space meaningful to people.

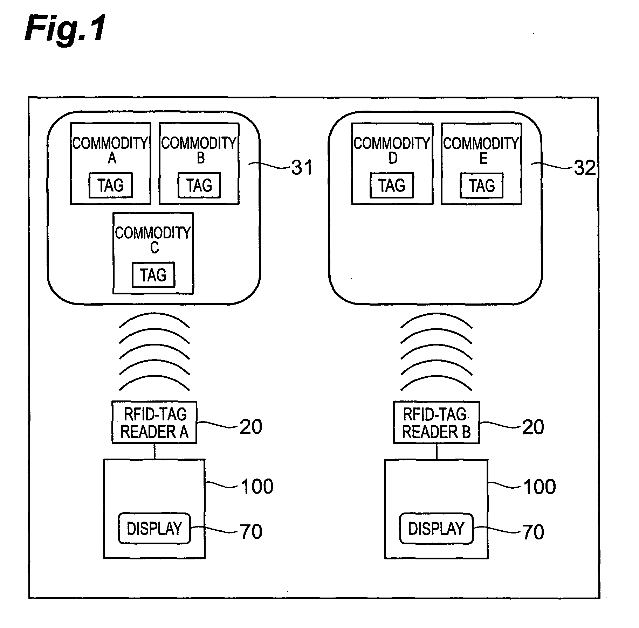

Fig. 1 shows a conceptual diagram of salesplaces in stores. As described later, RFID-tag reader A detects commodity A, commodity B, and commodity C which are a type of things existing in spatial area 31, via RFID-tags, and place management apparatus 100 is able to recognize them. Another RFID-tag reader B detects commodity D and commodity E existing in spatial area 32, via RFID-tags, and place management apparatus 100 is able to recognize them. Commodities A-C are placed in spatial area 31 and, where the commodities A-C are fresh fish, the spatial area 31 is a fresh fish salesplace. Then the place management apparatus 100 is able to recognize the spatial area 31 as a fresh fish salesplace. Likewise, where the commodities D and E in the spatial area 32 are meat, the place management apparatus 100 is able to recognize that the spatial area 32 is a meat salesplace.

The spatial areas 31, 32 are "places" varying depending upon attributes of commodities, and the present

4

invention is directed to management of the "places" by which the "places" are appropriately managed so as to provide services suitable for the respective places. In the example of Fig. 1, for example, bargain information is provided for customers by providing such a service as to deliver coupons to cell phones owned by the customers, whereby it is feasible to provide the appropriate service for the customers and to enhance buying intention of the customers.

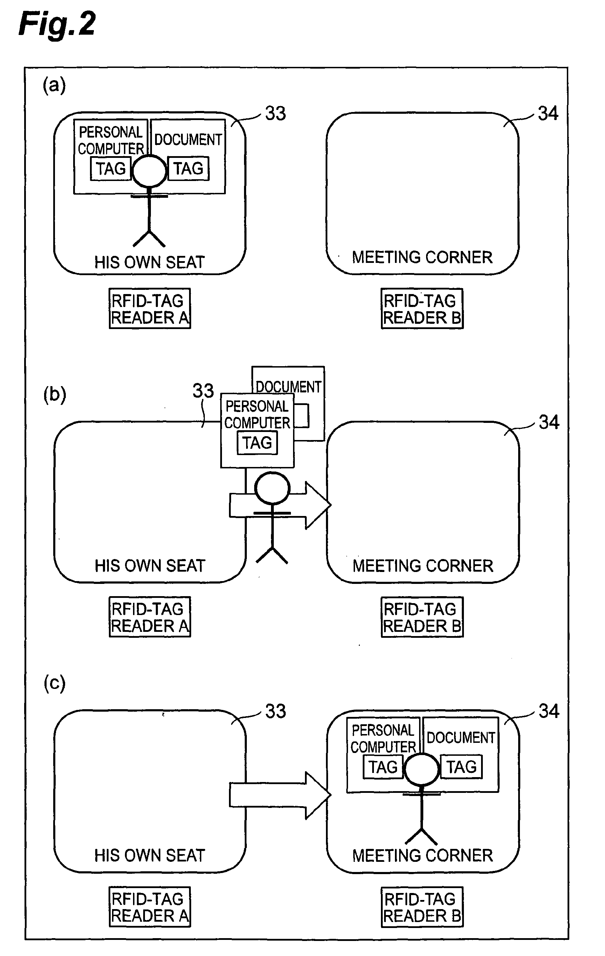

Fig. 2 shows another example. Fig. 2(a) shows a man working with a personal computer and a document in a spatial area 33 which is his seat. RFID-tag reader A detects the personal computer and document and a place management apparatus (not shown) recognizes the spatial area 33 as a workplace and manages it. Now, the man is carrying the personal computer and document to a meeting corner, as shown in Fig. 2(b). Then the man has arrived at the meeting corner and is now having a meeting, using the personal computer and document, as shown in Fig. 2 (c). In this situation, RFID-tag reader B detects the arrival of the personal computer and document at the meeting corner and a place management apparatus (not shown) recognizes spatial area 34 as a workplace. Namely, the place management apparatus comes to recognize that the workplace has moved from the seat to the meeting corner.

In this manner, "places" vary according to their environments or the like and vary mainly with movement of things such as commodities. In this example, if the system is arranged to appropriately manage where is the workplace, for example, in a case where the personal computer is used to make access to some data, the system is able to provide a service to implement automatic access to data associated with a work and quick downloading of the data.

As described above, "places" vary depending upon subjective information of people, environments around the places, and things located in the places, and it is necessary to appropriately manage them. The details thereof will be described below.

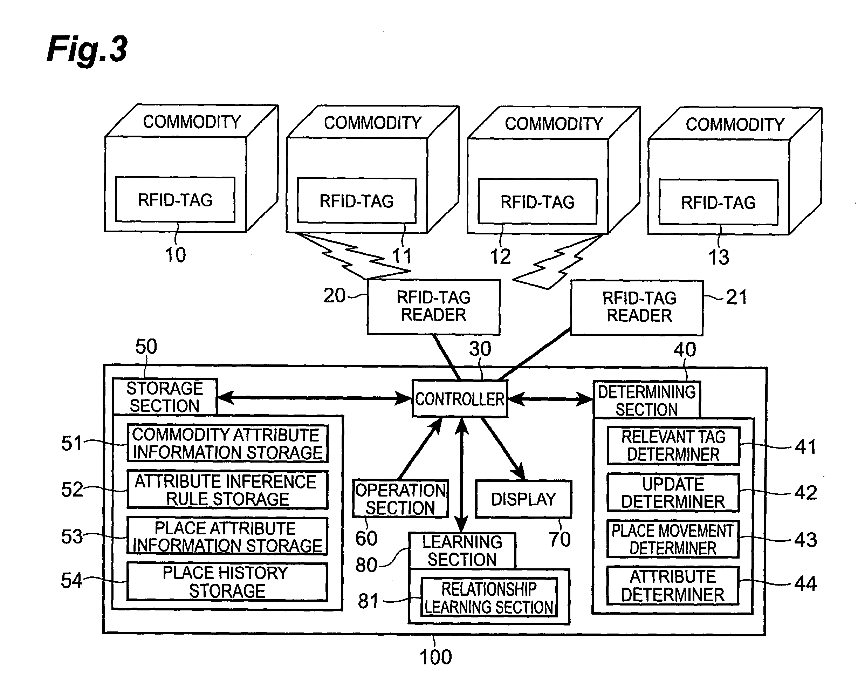

A place management system of the present invention will be described on the basis of the drawings. Fig. 3 is a configuration diagram of the place management system according to the present embodiment. The place management system of the present embodiment is comprised of a place management apparatus 100 and RFID-tag readers 20, 21 for reading RFID-tags attached to commodities, and the place management apparatus 100 is comprised of a controller 30 (reception controlling means of the present invention), a determining section 40, a storage section 50, an operation section 60, a display section 70, and a learning section 80 (attribute inference rule learning means of the present invention).

Furthermore, the determining section 40 is comprised of a relevant tag determiner 41, an update determiner 42 (updating means of the present invention), a place movement determiner 43 (place movement determining means of the present invention), and an attribute determiner 44 (attribute determining means of the present invention), and the storage section 50 is comprised of a commodity attribute information storage 51 (thing attribute information storing means of the present invention), an attribute inference rule storage 52 (attribute inference rule information storing means of the present invention), a place attribute information storage 53 (place attribute information storing means of the present invention), and a place history storage 54 (place history storing means of the present invention). The place management apparatus 100 is physically constructed of a CPU (central processing unit), a RAM, a ROM, a keyboard, a display, and so on.

RFID-tags 10-13 are read-only wireless IC tags composed of RFID (Radio Frequency Identification) chips, and unique RFID-tag IDs are assigned to the respective tags when manufactured. It is assumed herein that the RFID-tag IDs of the RFID-tags 10-13 attached to respective commodities are "0001", "0002", "0003", and "0004", respectively. When each RFID-tag 10-13 receives a carrier wave from tag reader 20, it responds to the carrier wave to transmit a response of a carrier wave containing the aforementioned RFID-tag ID assigned thereto, to the RFID-tag reader 20.

The RFID-tag reader 20 reads the RFID-tag IDs stored in the RFID-tags 10, 11, 12, and 13 attached to the commodities existing in a place which is a spatial area indicating a predetermined range, and transmits the RFID-tag IDs together with a reader ID assigned to the RFID-tag reader 20, to the controller 30.

The RFID-tag reader 21 reads RFID-tag IDs stored in RFID-tags attached to commodities (not shown) existing in another place different from the place where the RFID-tag reader 20 can read the RFID-tags, and transmits the RFID-tag IDs along with a reader ID assigned to the RFID-tag reader 21, to the controller 30.

The controller 30 has a reception function of receiving the RFID-tag IDs read by the RFID-tag readers 20, 21, and the reader IDs and generally controls the determining section 40, storage section 50, operation section 60, display section 70, and learning section 80. Particularly, the controller 30 is one capable of providing proper information to permit the determining section 40 to appropriately perform determination of update, determination of movement, etc., retrieving information from the storage section 50 so as to permit the determining section 40 to perform appropriate determination, and registering information in the storage section 50 in order to update information therein.

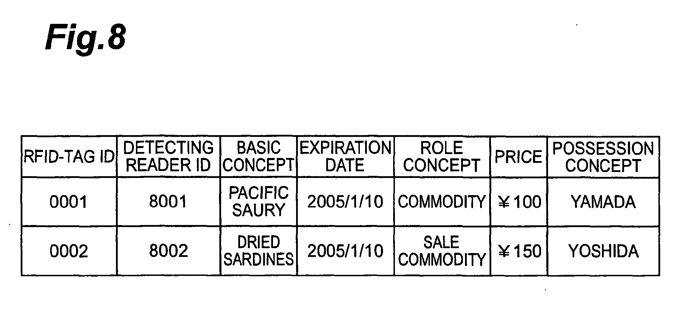

The relevant tag determiner 41 specifies an RFID-tag ID, a reader ID, or the like with change. Specifically, where an RFID-tag ID of an RFID-tag newly added to a place, a reader ID of an RFID-tag reader having performed a reading operation thereof, and a reader ID different from the reader ID of the RFID-tag reader having performed the reading operation are registered in commodity attribute information described later, the relevant tag determiner 41 specifies the reader ID. The commodity attribute information is configured in the format shown in Fig. 8 and is stored in the commodity attribute information storage 51. The details will be described later.

In addition, the relevant tag determiner 41 specifies a reader ID of an RFID-tag reader having performed a reading operation, and specifies an RFID-tag ID of an RFID-tag not ever read by any RFID-tag reader among the reader IDs under registration in the commodity attribute information, and a reader ID corresponding to this RFID-tag ID. Namely, it refers to the commodity attribute information storage 51 to extract RFID-tag IDs stored with the reader IDs received from RFID-tag readers 20, 21 as detecting readers. If an RFID-tag ID absent among the RFID-tags currently read by the RFID-tag readers 20, 21 is stored as commodity attribute information, the relevant tag determiner 41 extracts this RFID-tag ID and its detecting reader ID stored in the commodity attribute information storage 51 including this RFID-tag ID, thereby specifying the RFID-tag ID and its reader ID. The detecting reader ID associated with the foregoing RFID-tag ID, stored in the commodity attribute information storage 51, is deleted.

Then the apparatus registers the reader ID of the RFID-tag reader having performed the reading operation, in correspondence with the read RFID-tag ID in the detecting reader ID column of the commodity attribute information preliminarily stored in the commodity attribute information storage 51.

The relevant tag determiner 41 sends the reader ID and the RFID-tag ID obtained by the above processing, to the update determiner 42 described later. Concerning a reader ID not read and a reader ID not registered, these reader IDs are not sent to the update determiner 42, and a reader ID read and a reader ID registered are sent together with the RFID-tag ID.

The update determiner 42 specifies a place to be updated, based on the reader ID of the RFID-tag reader 20, 21 having performed the reading operation, specified by the relevant tag determiner 41, the reader ID stored in the commodity attribute information storage 51 (which is different from the reader ID of the RFID-tag reader having performed the reading operation), and the RFID-tag ID of the RFID-tag with change.

Specifically, the update determiner 42 makes a determination as follows: as to a place with the corresponding reader ID column of the place attribute information storage 53 containing a reader ID stored in the commodity attribute information storage 51 if an RFID-tag ID with change is included in the constitutive thing ID column of that place, the update determiner 42 makes a determination of "need for update"; if it is not included, the update determiner 42 makes a determination of "no need for update". It also makes a determination of "need for update", for a place with the corresponding reader ID column of the place attribute information storage 53 containing a reader ID of a RFID-tag reader having performed a reading operation.

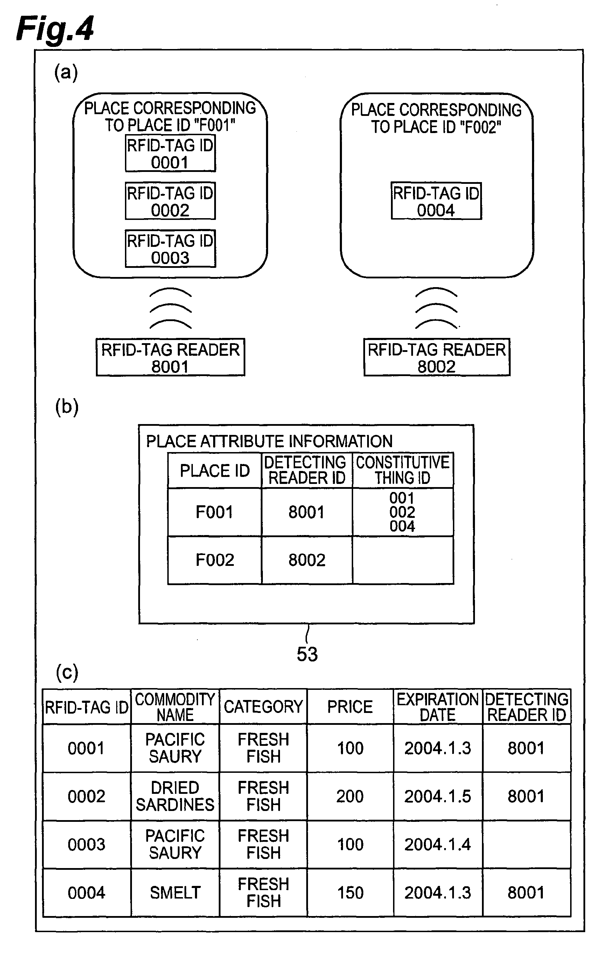

Namely, the update determiner 42 makes a determination of need for update from the viewpoint of adding the new RFID-tag ID to the place corresponding to the reader ID of the RFID-tag reader 20 actually having read it, and makes a determination of need for update from the viewpoint of deleting the RFID-tag ID from the place attribute information about the place including the read RFID-tag ID, stored in the place attribute information storage 53, thereby determining that there occurred a change in the existing RFID-tags and that there was a change in the attribute of the place. A specific example of this will be described with reference to Fig. 4. Fig. 4(a) is an illustration showing RFID-tag IDs actually existing in places, Fig. 4(b) a simplified illustration of the place attribute information stored in the place attribute information storage 53, and Fig. 4(c) an illustration to illustrate commodity attribute information stored in the commodity attribute information storage 51.

As shown in Fig. 4(a), RFID-tag IDs actually existing in a place corresponding to a place ID "F001" are "0001", "0002", and "0003". An RFID-tag ID actually existing in a place corresponding to a place ID "F002" is "0004". As shown in Fig. 4(b), constitutive thing IDs of the place attribute information stored in the place attribute information storage 53 are "0001", "0002", and "0004" for the place with the place ID "F001", and nothing is registered for the place with the place ID "F002". As shown in Fig. 4(c), there is no detecting reader ID for the RFID-tag ID "0003", and the detecting reader "8001" is described in the other RFID-tag IDs.

There are cases where an actual place is different from the place attribute information to manage this place, as described above. When in this state the RFID-tag readers read the RFID-tag IDs, the RFID-tag reader with the reader ID "8001" detects the RFID-tag IDs "0001" to "0003", and the RFID-tag reader with the reader ID "8002" detects the RFID-tag ID "0004" (cf. Fig. 4(a)). Then these RFID-tag readers send the detected RFID-tag IDs together with the reader ID of their own to the relevant tag determiner 41. The relevant tag determiner 41 refers to the commodity attribute information storage 51 (cf. Fig. 4(c)) to extract a detecting reader or detecting readers associated with the RFID-tag IDs acquired from the RFID-tag readers. Since the RFID-tag ID "0003" has no detecting reader ID, the relevant tag determiner 41 determines that it is an RFID-tag with change, and transmits the RFID-tag ID "0003" and the reader ID "8001" having detected it this time, to the update determiner 42. Concerning the RFID-tag ID "0004", the previous detecting reader ID is "8001", and the current detecting reader ID is "8002". Therefore, the relevant tag determiner 41 determines that it is an RFID-tag ID with change, and transmits the RFID-tag ID "0004", the previous detecting reader ID "8001", and the current detecting reader ID "8002" similarly to the update determiner 42. Then the relevant tag determiner 41 updates the detecting reader IDs for the RFID-tag IDs "0003" and "0004" in the commodity attribute information storage 51 to "8001" and to "8002", respectively.

The update determiner 42 receives the RFID-tag ID, the detecting reader ID previously having detected it, and the detecting reader ID currently having detected it, from the relevant RFID-tag determiner 41, and specifies a place to be updated. First, the update determiner 42 refers to the place attribute information storage 53 (cf. Fig. 4(b)) and makes a determination of "need for update" for the place ID "F001" containing as a corresponding reader ID the detecting reader ID "8001" of the reader currently having detected the RFID-tag ID "0003", because it is the place in which the new RFID-tag ID appeared. Next, the update determiner 42 extracts constitutive thing IDs as to the place ID "F001" containing as a corresponding reader ID the detecting reader ID "8001" previously having detected the RFID-tag ID "0004". Since "0004" is included in the constitutive thing IDs (cf. Fig. 4(b)), the update determiner 42 makes a determination of need for update for the place ID "F001". Furthermore, the update determiner 42 makes a determination of "need for update" for the place ID "F002" containing the current detecting reader ID "8002" of the RFID-tag ID "0004" as a corresponding reader ID, because it is the place in which the new RFID-tag ID appeared (cf. Fig. 4(a)).

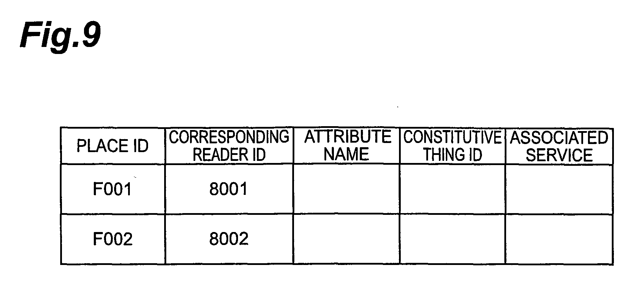

The place attribute information is stored in the format as shown in Figs. 9-11 and Fig. 13. The details will be described later.

Furthermore, for making a determination of need for update, the update determiner 42 involves separate consideration to the following cases based on the RFID-tag IDs constituting a place. Namely, concerning a place for which a reader ID stored in the commodity attribute information storage 51 is described in the corresponding reader ID column of the place attribute information storage 53, if the RFID-tag reader corresponding to the corresponding reader ID of that place fails to detect all the RFID-tag IDs stored as constitutive thing IDs of the place, the update determiner 42 makes a determination of "extinction of place" and transmits the place ID to the controller 30.

If the RFID-tag reader corresponding to the corresponding reader ID of the place fails to detect one or more RFID-tag IDs stored as constitutive thing IDs of the place, the update determiner 42 makes a determination of "change of place" and transmits the place ID to the controller 30.

Furthermore, concerning a place for which a reader ID of an RFID-tag reader having read an RFID-tag is described in the corresponding reader ID column of the place attribute information storage 53, the update determiner makes a determination of "generation of place", and transmits an RFID-tag ID about which the reader ID of the RFID-tag reader having read the RFID-tag is different from the reader ID of the RFID-tag reader previously having read it, to the controller 30.

The place movement determiner 43 refers to the place history storage 54 via the controller 30 to determine whether there is a place ID of a place with a constitutive thing ID matching the RFID-tag ID received through the controller 30 from the update determiner 42, in the place history storage 54. If there is such a place ID, the place movement determiner 43 makes a determination of "movement" of the place and notifies the controller 30 of that fact. If there is no such place ID, the place movement determiner 43 makes a determination of "no movement" of the place, and notifies the controller 30 of that fact.

The attribute determiner 44 acquires commodity attribute information related to RFID-tag IDs from the commodity attribute information storage 51 through the controller 30, and calculates a common attribute degree in order to determine a commonality among commodities. The common attribute degree is calculated according to Eq (1) below.

$$\text{Common attribute degree} = (\text{the number of things existing in the same place and having the same attribute value}) / (\text{the number of things existing in the same place}) \qquad (1)$$

Then the common attribute degree is calculated for all the attributes (items), using above Eq (1), and an attribute of commodities with an attribute value of not less than a fixed value is identified as a common attribute of the place. There are cases where a plurality of attribute values are identified by extracting attributes with attribute values of not less than the fixed value. In this case, each of the attribute values is identified as a common attribute and the place can be regarded as being composed of the plurality of attributes.

Thereafter, an attribute inference rule is applied to determine an attribute of a place. The attribute inference rule will be described later.

The attribute determiner 44 calculates a probability of existence of an attribute of a place, probability(y), according to Eq (2) below, using a relationship between attribute information of a thing, thing$_j$, and attribute information of a place, place$_l$, stored in the attribute inference rule storage 52, i.e., relationship$_{l,j}$.

$$probabilit\,y(y) = \prod_{j=1}^{J} \left( \sum_{l=1}^{L} h_l(y)\,relationsh\,ip_{l,j}\{thing_j,\,place_l\}\right)^{x_j} \qquad (2)$$

where

$$h_1(y) \;=\; y_1 / \sum_{l'=1}^{L} y_{1'},$$

$1 = 1, ..., L$, $x_j$ : frequency of appearance of thing$_j$, and $y_l = 1$ (if attribute $y_l$ of place is present) or 0 (if attribute $y_l$ of place is absent).

Using Eq (2), the probability is calculated for all combinations with and without the attribute of the place, and an attribute set of the place with a maximum probability is defined as a result of inference.

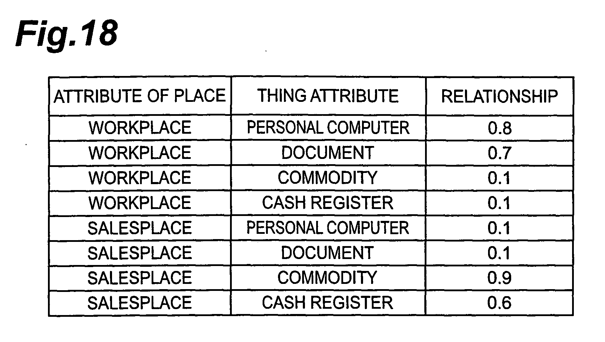

For example, let us suppose that relationships between attributes of things and attributes of places shown in Fig. 18 are stored, as an attribute inference rule. The details of relationships will be described later. It is assumed herein that there are a personal computer and a document in a certain space of interest and that there are a workplace and a salesplace as attributes of places as targets. In order to specify a place existing in the space of interest, the probability is calculated using Eq (2) for all combinations of a case with the attributes of the two places described above and the other cases without them, i.e., {workplace}, {salesplace}, and {workplace∧salesplace}.

probability {workplace|personal computer, document}

$= 0.8 \times 0.7 = 0.56$

probability {salesplace|personal computer, document}

$= 0.1 \times 0.1 = 0.01$

probability {workplace ∧ salesplace|personal computer,

document} = $(0.5 \times 0.8 + 0.5 \times 0.1) \times (0.5 \times 0.7 + 0.5$

$\times 0.1) = 0.18$

In consequence, the workplace with the maximum probability is outputted as a result of the inference.

The commodity attribute information storage 51 stores commodity attribute information about commodities, and stores the RFID-tag IDs transmitted from the controller 30, and the commodity attribute information entered by a user, in association with each other. Examples of the attribute information include a commodity name, a category, a price, an expiration date, and so on. When the RFID-tag readers 20, 21 read RFID-tags, the relevant tag determiner 41 registers a relevant reader ID as a detecting reader ID for each of RFID-tag IDs.

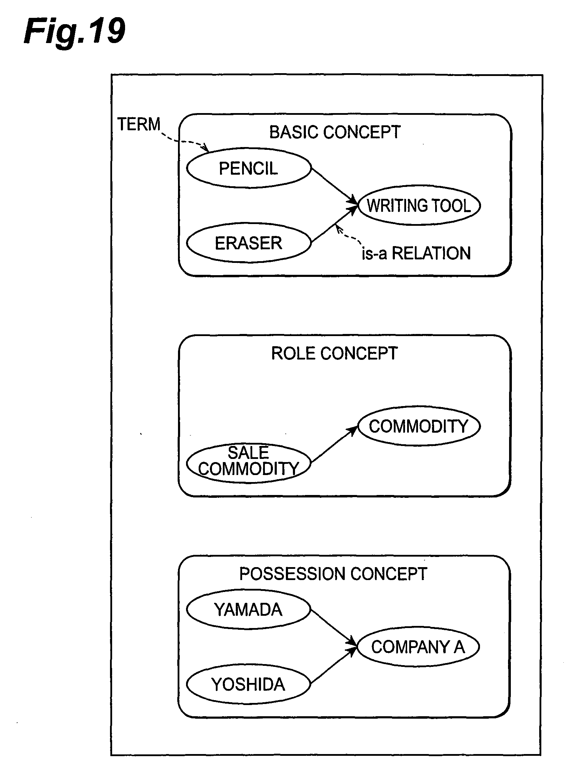

The commodity attribute information storage 51 also stores concepts implicating attribute information of things and an ontology to define relations between concepts. The concepts implicating the attribute information of things include a basic concept, a role concept, a possession concept, and so on. The basic concept is conceptualization based on an essential property of a thing, and corresponds to "Pacific saury", "fish", "pencil", and so on. The role concept is conceptualization based on a property given to a thing by a person, and corresponds to "commodities", "sale commodities", and so on. The possession concept is conceptualization from the viewpoint of an owner of a thing, and corresponds to a person name (e.g., Yamada, Yoshida, and so on), a company name, and so on. Relations between terms defined by the respective concepts include the is-a relation, the has-a relation, and so on. The "is-a relation" represents a super-subrelation between concepts and corresponds to a relation of "writing instrument"-"pencil" or the like. The "has-a relation" represents a configuration between concepts and corresponds to "personal computer"-"hard disk". Fig. 19 shows an example of the ontology.

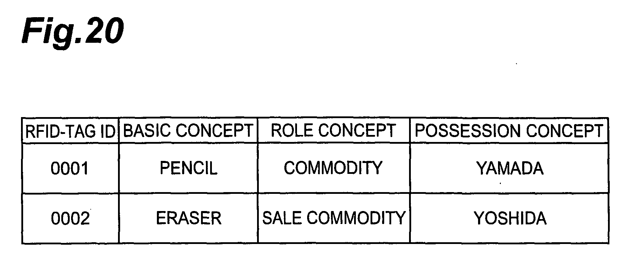

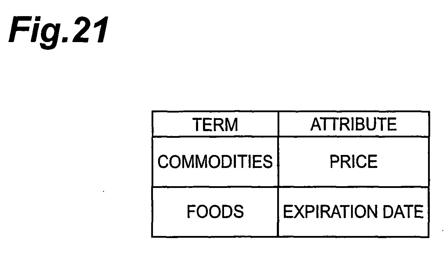

The lowest layer in the is-a relation between relevant terms in the respective concepts is described in a category stored in the commodity attribute information storage 51. Fig. 20 shows thing attribute information using the ontology about two things. An attribute is related to each term defined by the ontology. An example thereof is shown in Fig. 21. In Fig. 21, an attribute of "price" is related to the term of "commodities", and an attribute of "expiration date" is related to the term of "foods".

Namely, for each thing, an ID and a detecting reader ID thereof, a term defined in the ontology, and an attribute related to the term are registered as thing attribute information. This is shown in Fig. 8. The RFID-tag IDs are read by RFID-tag reader 20, and the commodity name, category, price, and expiration date are information items entered by the user through processing described later. The detecting reader ID is a reader ID of an RFID-tag reader having read each RFID-tag ID, and is one registered as commodity attribute information when the RFID-tag reader performed the reading process.

For example, where "category" is one of common attributes of not less than the fixed value calculated according to aforementioned Eq (1), reference is made to the attribute inference rule stored in the attribute inference rule storage 52, and the attribute inference rule of "category = fresh fish" → "fresh fish salesplace" preliminarily registered is extracted. By applying this attribute inference rule, the attribute determiner 44 can determine that the place is a fresh fish salesplace. A variable of x may also be used in the attribute inference rule, using such a format as "category = x" → "x salesplace". This eliminates a need for performing the registration process for all the categories. Where a common attribute degree of not less than the fixed value is obtained for a category according to the attribute inference rule using the variable, a fresh fish salesplace is obtained as an attribute if x of the resultant category is fresh fish; a meat salesplace can be obtained as an attribute if x is meat.

There is another format of the attribute inference rule consisting of a combination of three items: an attribute of a thing, an attribute of a place, and a relationship. The relationship herein is learned in the attribute inference rule learning section 81. Fig. 18 shows the relationships between attributes of things and attributes of places.

The place attribute information storage 53 stores attribute information of places, and stores place IDs, corresponding reader IDs, attribute names of places, constitutive thing IDs, associated services, etc. in correspondence to each other in the format as shown in Figs. 9-10 and Fig. 13. Information registered in the initial stage is only the place IDs, and the corresponding reader IDs, attribute names, constitutive thing IDs constituting an attribute of each place (which are RFID-tag IDs but are not all the IDs existing in each place), and associated services are successively stored through processes described later (cf. Figs. 9-11, and Fig. 13). RFID-tag IDs of RFID-tags actually existing in each place may be included in the aforementioned constitutive thing ID column, but these RFID-tag IDs need to be distinguishable from the RFID-tag IDs constituting an attribute.

The place history storage 54 stores attribute information of each extinct place, and stores a history of attribute information of each place. When performing a place extinction process of a place, the controller 30 performs such control as to extract the attribute information of the place indicated by the place ID to be subjected to the extinction process, from the place attribute information storage 53, to store the attribute information in association with the place ID in the place history storage 54, and to erase the relevant place from the place attribute information storage 53. The place history storage 54 erases the history information of the place corresponding to the place ID of the place instructed by the controller 30.

The display section 70 displays an attribute of a place or the like according to control by the controller 30.

The attribute inference rule learning section 81 automatically generates the inference rule for inference of attribute information of a place by learning. The attribute inference rule learning section 81 acquires attribute information of things existing in a place, through the controller 30 and acquires attribute information of the place given by manual entry through the operation section 60 or the like. The attribute inference rule learning section 81 applies one of existing learning techniques or the like to these information to specify a relationship between an attribute of each thing and the attribute of the place. The existing learning techniques include such techniques as the maximum likelihood estimation method, the posterior distribution optimization method, and the TF-IDF method. It is also possible to perform learning by a TP-ICF method represented by Eq (3) below, though it is not an existing method.

$$\text{Relationship } (\text{attribute}_i \text{ of thing, attribute}_j \text{ of place}) = (\text{the number of thing lists including attribute}_i \text{ of thing with attribute}_j \text{ of place})/(\text{the number of thing lists with attribute}_j \text{ of place}) \times$$

$$[\log\{(\text{the number of species of attributes of}$$

$$\text{places})/(\text{the number of species of attributes of places}$$

$$\text{including attribute}_i \text{ of thing})\} + 1] \tag{3}$$

Unless a sufficient number of data for learning of relationship is acquired, the relationship can be specified by Eq (4) below, for example, using cooccurrence with a search engine of WEB.

$$\text{Relationship (attribute}_i \text{ of thing, attribute}_j \text{ of}$$

$$\text{place)} = (\text{the number of WEB pages including attribute}_i$$

$$\text{of thing with attribute}_j \text{ of place})/(\text{the number of WEB}$$

$$\text{pages including any one of attributes}_i \text{ of things as}$$

$$\text{targets and attribute}_j \text{ of place}) \times [\log\{(\text{the number of}$$

$$\text{WEB pages including attribute}_i \text{ of thing and attribute}_j$$

$$\text{of place})/(\text{the number of WEB pages including attribute}_j$$

$$\text{of place})\} + 1] \tag{4}$$

The relationship between the attribute of each thing and the attribute of the place learned herein is stored through the controller 30 into the attribute inference rule storage 52.

Subsequently, the operation of the place management system of the present embodiment will be described.

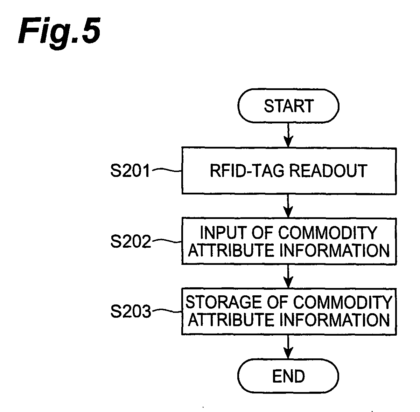

First, the process of registering the commodity attribute information corresponding to RFID-tag IDs into the commodity attribute information storage 51 will be described. Fig. 5 is an operation flowchart showing the operation in the process.

RFID-tag IDs of RFID-tags 10-13 attached to commodities are read by RFID-tag reader 20 and are outputted to the commodity attribute information storage 51 (S201). Then the system moves into a mode in which the user is allowed to register the commodity attribute information in correspondence with the RFID-tag IDs in the commodity attribute information storage 51, and thus the user can enter the commodity attribute information in the format as shown in Fig. 8 (S202).

Here only the RFID-tag IDs are stored as the commodity attribute information in the commodity attribute information storage 51, and the user arbitrarily enters data in blank portions such as the commodity name and the owner in this commodity attribute information, thereby performing the registration process. For example, concerning the commodity with the RFID-tag 10, as shown in Fig. 8, "commodity name = Pacific saury", "category = fresh fish", "price = 100", and "expiration date = 2004. 1. 3" can be entered as the attribute information into the columns of the RFID-tag ID "0001". In addition, the reader ID of the RFID-tag reader read is registered as a detecting reader ID in correspondence to the RFID-tag ID. Instead of using these processes, it is also possible to permit entry of the attribute information anytime, e.g., in production stages of commodities and the present apparatus. The attributes of commodities are not limited to those listed herein.

After completion of the entry process by the user, the commodity attribute information storage 51 performs a process of storing the commodity attribute information (S203). Similar processing can also be performed with the RFID-tag reader 21.

Through the processes as described above, the RFID-tag reader 20 is able to read the RFID-tags 10-13 attached to commodities and to make the commodity attribute information storage 51 store the attributes of commodities as the commodity attribute information.

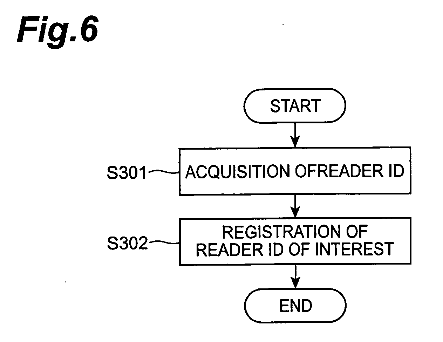

Next, the operation of registering a reader ID uniquely assigned to each RFID-tag reader, as a corresponding reader ID in the place attribute information will be described. Fig. 6 is an operation flowchart showing the registration process.

First, the reader ID of the RFID-tag reader 20 corresponding to a place is acquired by means of a dedicated reading machine owned by the user (S301). The reader ID permitting unique identification of the RFID-tag reader 20 to read RFID-tags existing in the place is assigned to the RFID-tag reader 20. The reader ID may be given by an RFID-tag or by a production number thereof. The reader ID is extracted by the reading machine owned by the user herein, but the reader ID may be manually obtained in such a manner that the user visually acquires the reader ID described on a seal attached to the RFID-tag reader 20.

The reader ID of the RFID-tag reader obtained in this manner is registered in correspondence with the place ID in the place attribute information storage 53 (S302). Similar processing can also be performed with the RFID-tag reader 21.

A specific example of the above processing is shown in the drawing. Fig. 9 is an illustration to illustrate the place attribute information stored in the place attribute information storage 53. With reference to Fig. 9, "F001" is assigned to a place ID, and the user is allowed to enter the reader ID "8001" of the RFID-tag reader 20 into the column corresponding to the place ID "F001", and to enter the reader ID "8002" of the RFID-tag reader 21 as a corresponding reader ID into the column of the place ID "F002". In addition thereto, the attribute names indicating attributes of places, constitutive thing IDs being RFID-tag IDs of RFID-tags attached to commodities constituting each place, and associated services of the places are registered in the place attribute information storage 53, and their registration processing thereof will be described later.

In this example a corresponding reader ID "8001" or "8002" is assigned to one place, but it is also possible to register a plurality of corresponding reader IDs to one place. For registering a plurality of corresponding reader IDs, it is possible to apply a range of a sum (OR) thereof or a range of a product (AND). It is also possible to associate one reader ID with a plurality of place IDs.

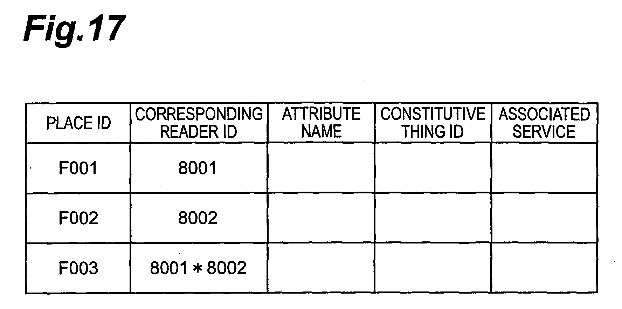

A specific example of such registration is shown in the drawing. Fig. 17 is an illustration to illustrate another example of the place attribute information. In Fig. 17, the reader ID "8001" and the reader ID "8002" are registered as corresponding reader IDs in the respective columns of the place IDs "F001" and "F002", and a result of AND operation for indicating a place capable of reading both of the reader ID "8001" and the reader ID "8002" is indicated as a corresponding reader ID of the place ID "F003". It is noted that, as described above, a result of OR operation may be adopted instead of the result of AND operation, or a result of subtraction of a readout by one reader from a readout by another reader may also be adopted.

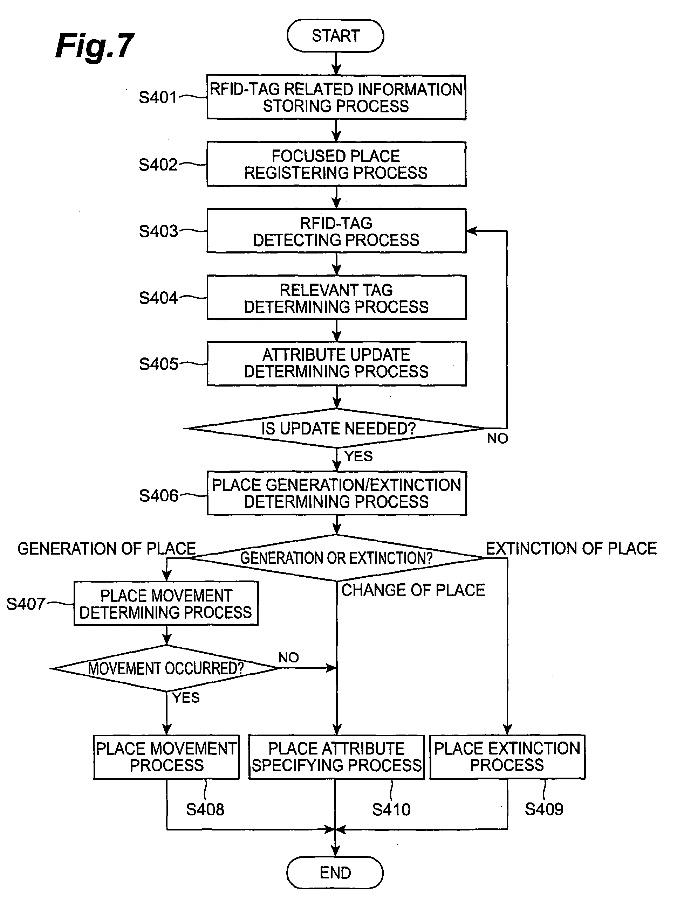

Next, the overall operation of the place management apparatus will be described. Fig. 7 is an operation flowchart showing the operation of the place management system of the present embodiment.

A storing process is carried out to store the commodity attribute information related to the RFID-tags, according to the aforementioned processing shown in Fig. 5 (S401).

After the storing process of these, a registration process is carried out to register place IDs and corresponding reader IDs according to the processing shown in Fig. 6 (S402).

After the various information items are preliminarily registered as described above, commodities with RFID-tags are carried to a salesplace, whereupon the RFID-tag reader 20 detects the RFID-tags attached to the commodities and reads the RFID-tag IDs thereof (S403). For example, supposing "0001", "0002", "0003", and "0004" are assigned to the respective RFID-tag IDs for four commodities, the RFID-tag reader 20 extracts these RFID-tag IDs and outputs them together with the reader ID held in the RFID-tag reader itself, to the controller 30.

The relevant tag determiner 41 receives the reader ID and RFID-tag IDs through the controller 30, recognizes what commodities have been carried into the detection range of which RFID-tag reader, and determines an RFID-tag ID of an RFID-tag with change, the reader ID of the RFID-tag reader having performed the reading operation, and a reader ID to be registered in the commodity attribute information (except for the reader ID of the RFID-tag reader having performed the reading operation) (S404).

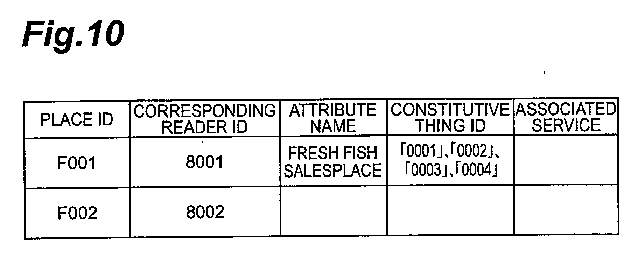

Next, the update determiner 42 determines whether it is necessary to update the attribute of the place corresponding to the place ID, using the RFID-tag ID determined by the relevant tag determiner 41 (S405). Specifically, concerning a place for which the reader ID stored in the commodity attribute information storage 51 is included in the corresponding reader ID column of the place attribute information storage 53, the update determiner 42 makes a determination of "need for update" if an RFID-tag ID with change is included in the constitutive thing ID column of the place, or makes a determination of "no need for update" unless an RFID-tag ID with change is included in the constitutive thing ID column of the place. It also makes a determination of "need for update" for a place for which the reader ID of the RFID-tag reader currently having performed the reading operation is included in the corresponding reader ID column of the place attribute information storage 53. With a determination of no need for update, the controller 30 then performs the RFID-tag detecting process again (after passage of a predetermined time, or at a time of carrying-in of commodities) (S403). The update determining process is carried out for each place ID; in the example as shown in Figs. 9 and 10, where the place IDs "F001" and "F002" are set, whether an update is necessary is determined for each of the places.

With a determination of need for update, the update determiner 42 further makes a determination on whether the current status is generation of a place, extinction of a place, or change in contents of a place (S406).

Specifically, concerning a place for which the reader ID previously detected is described in the corresponding reader ID column of the place attribute information storage 53, the update determiner 42 makes a determination of "extinction of place" if neither of RFID-tag IDs stored as constitutive thing IDs of the place is detected by the RFID-tag reader corresponding to the corresponding reader ID of that place, and transmits the place ID to the controller 30, thereby executing a process of "extinction of place" (S409).

If one or more RFID-tag IDs stored as constitutive thing IDs of the place are not detected by the RFID-tag reader corresponding to the corresponding reader ID of the place, the update determiner 42 makes a determination of "change of place", and transmits the place ID to the controller 30, thereby executing an attribute specifying process of the place being a process of "change of place" (S410).

Furthermore, concerning a place for which a reader ID of an RFID-tag reader having read an RFID-tag is described in the corresponding reader ID column of the place attribute information storage 53, the update determiner 42 makes a determination of "generation of place" and transmits the RFID-tag ID for which the reader ID of the RFID-tag reader having read it is different from the reader ID of the RFID-tag reader previously having read it, to the controller 30, thereby performing a place movement determining process (S407).

Another case to determine whether an attribute of a place has been updated is a case where the user modifies the commodity attribute information and where the controller 30 sends a notification that an attribute of a commodity was updated.

When it is then determined at S406 that there was generation of a place, the place movement determiner 43 performs the place movement determining process (S407). Namely, the place movement determiner 43 performs the movement determining process with reference to the information stored in the place history storage 54 to determine whether the place with one or more RFID-tag IDs newly having appeared is one having existed in the past. Specifically, it compares the RFID-tag IDs newly having appeared, with the constitutive thing IDs (RFID-tag IDs) constituting the place stored in the place history storage 54 to determine whether they are completely coincident with each other, thereby performing the movement determination. By determining the place corresponding to the place ID where the RFID-tag IDs existed in the past, as described above, it can be determined that the RFID-tag IDs existing in the place generated at present moved from the place where they existed in the past.

Then the controller 30 performs a place movement process (S408). Specifically, the controller 30 reads the attribute information (attribute name, constitutive thing IDs, and associated service) about the place ID of the place from the place history storage 54, the place attribute information storage 53 stores the attribute information, and the place history storage 54 deletes the attribute information about the place ID, thereby performing the movement process.

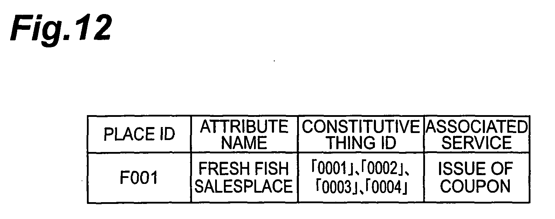

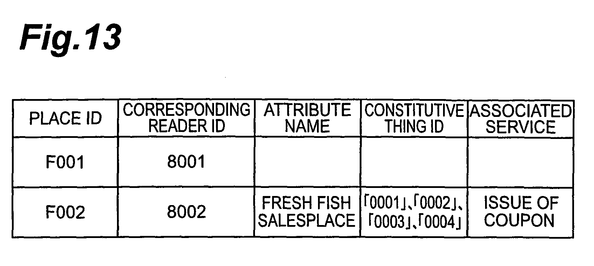

A specific example of the movement process will be described with reference to the drawings. Fig. 12 is an illustration showing the history information indicating a history of a place stored in the place history storage 54. Fig. 13 is an illustration showing the place attribute information stored in the place attribute information storage 53.

The attribute information (attribute name, constitutive thing IDs, and associated service) of commodities having existed in a certain place is registered in the place history storage 54 shown in Fig. 12, and in the example of Fig. 12, the attribute information such as attributes of the commodities having existed in the place that can be read by the RFID-tag reader 20 (the place corresponding to the place ID "F001"), and the attribute of the place are registered therein. What commodities have existed in which place in the past can be known using the attribute information shown in Fig. 12, and in the example of Fig. 12 it can be known that the RFID-tag IDs "0001" to "0004" as constitutive thing IDs existed at the place ID "F001".

When the place movement determiner 43 makes a determination of occurrence of movement of the place, a process of rewriting the attribute information, as shown in Fig. 13, is carried out using the place history information shown in Fig. 12. Specifically, the place movement determiner 43 makes a determination of occurrence of movement of the place by determining, based on the place attribute information stored in the place attribute information storage 53, that the RFID-tag reader 21 newly read the RFID-tags attached to the commodities existing in the place and that the RFID-tag IDs of the RFID-tags thus read are those previously read by the RFID-tag reader 20.

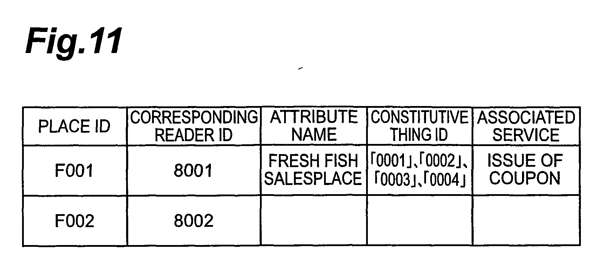

When the place movement determiner 43 makes a determination of occurrence of movement of the place, the controller 30 then performs a process of registering the attribute name, constitutive thing IDs, and associated service (cf. Fig. 11) described in the columns of the place ID "F001", in the columns of the place ID "F002", i.e., a process of copying the items except for the corresponding reader ID (cf. Fig. 13). Then the controller 30 deletes the relevant history information from the place history storage 54 after execution of the movement process.

At S407 to determine whether the place including the RFID-tag IDs existing in the newly generated place existed in the past, where it is determined with reference to the information stored in the place history storage 54 that no such place existed in the past and that there is no movement, an attribute specifying process of the place is carried out (S410). This process will be described later.

When it is determined at S406 that there was extinction of a place, the controller 30 performs a place extinction process (S409). Specifically, the controller 30 reads the attribute information corresponding to the place ID of the place from the place attribute information storages 53 and stores the attribute information except for the corresponding reader ID into the place history storage 54. Then the controller 30 deletes the attribute information from the place attribute information storage 53.

When it is determined at S406 that there was a change of a place or when it is determined at S408 that there is no movement, the attribute specifying process of the place is carried out (S410).

Specifically, the attribute determiner 44 acquires the information associated with the RFID-tag IDs from the commodity attribute information storage 51 through the controller 30, calculates the common attribute degree according to aforementioned Eq (1) for each attribute, and determines the attribute of the place, using the attribute inference rule.

Alternatively, the attribute determiner 44 calculates relationships between the attribute of each thing and the attribute of the place according to aforementioned Eq (3) or (4) on behalf of aforementioned Eq (1), calculates probabilities of the attribute of the place according to aforementioned Eq (2), and determines the attribute of the place with a highest probability. Alternatively, the attribute determiner 44 acquires the information associated with the RFID-tag IDs from the commodity attribute information storage 51 through the controller 30 and acquires a higher term by use of the ontology for each attribute information. Using these terms, the attribute of the place is determined according to the above-mentioned methods.

Thereafter, the controller 30 registers the determined attribute and constitutive thing IDs constituting the place in the place attribute information storage 53 and all the contents being the registered attribute information are outputted to the display section 70. The RFID-tag IDs are described as constitutive thing IDs constituting the attribute.

Fig. 10 is an illustration where the RFID-tag IDs as the constitutive thing IDs constituting the attribute, and the attribute name determined are described. With reference to this figure, the RFID-tag IDs "0001", "0002", "0003", and "0004" are registered in the column for registration of the constitutive thing IDs corresponding to the place ID "F001". The RFID-tag IDs registered herein are not all the RFID-tags existing in the place, but only the RFID-tag IDs of the RFID-tags for constituting the attribute of the place are registered.

The user is allowed to register an associated service for the place, in addition to these attribute information. Fig. 11 is an illustration showing the contents stored in the place attribute information storage 53 where the user registered the associated service by manipulating the operation section 60.

In this figure, "issue of coupon" is registered and coupons are delivered to cell phones owned by customers in accordance with the contents registered herein, thereby providing an appropriate service for the customers and enhancing the buying intension of the customers. The delivery of coupons can be implemented by infrared communication, Bluetooth, e-mail, or the like.

Next, the sequence of the generating process, the movement process, and the extinction process of the place in the place management system will be described with reference to the drawings.

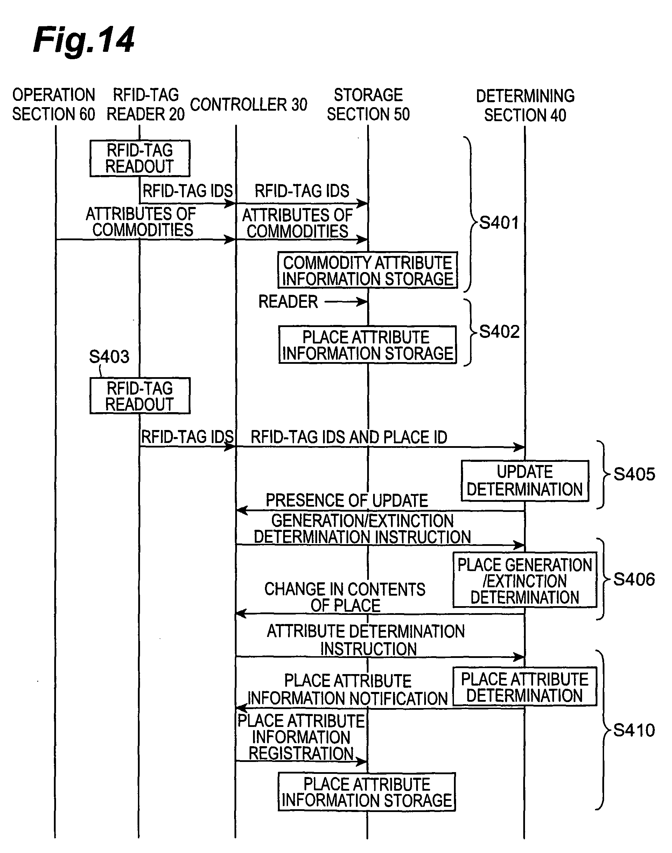

First, the registration processes of the commodity attribute information and the place attribute information, and the place generating process will be described. Fig. 14 is an operation sequence diagram of the processes. The determiner 40 is an abbreviated form of the determining section 40 composed of the relevant tag determiner 41, the update determiner 42, the place movement determiner 43, and the attribute determiner 44 as described above, and the storage 50 is an abbreviated form of the storage section 50 composed of the commodity attribute information storage 51, the attribute inference rule storage 52, the place attribute information storage 53, and the place history storage 54. The reference symbols used in Fig. 7 are also used for the processing shown in Fig. 14. Fig. 14 shows a case where the RFID-tag reader 20 reads RFID-tags.

Referring to the drawing, the RFID-tag IDs read by the RFID-tag reader 20 are fed to the controller 30 and the controller 30 outputs them to the storage 50. The attribute information of commodities entered through the operation section 60 by user's manipulation is fed through the controller 30 to the storage 50, and the storage 50 (commodity attribute information storage 51) stores the information as commodity attribute information (S401).

Next, the reader ID of the RFID-tag reader is read by means of the dedicated reading machine owned by the user, and the storage 50 (place attribute information storage 53) stores it (S402).

Then the RFID-tag reader 20 reads the RFID-tags 10-13 and outputs their RFID-tag IDs to the controller 30 (S403). The relevant tag determiner 41 refers to the storage 50 (commodity attribute information storage 51) through the controller 30 and outputs the reader ID of the RFID-tag reader previously having performed the reading operation, the reader ID of the RFID-tag reader currently having performed the reading operation, and an RFID-tag ID determined to undergo a change in association with these reader IDs, to the determiner 40. The determiner 40 (update determiner 42) performs a determination on update and in the present example the determiner 40 (update determiner 42) outputs a determination of an update being made, to the controller 30 (S405).

When receiving the presence of update, the controller 30 instructs the determiner 40 (update determiner 42) to make a determination on whether there was generation or extinction of a place. Receiving it, the determiner 40 (update determiner 42) determines whether there was generation or extinction of a place, or a change of contents, and at this stage it is determined that there was a change in the contents of the place and the determination is fed to the controller 30 (S406).

Receiving it, the controller 30 performs an update of the place attribute information and instructs the determiner 40 (attribute determiner 44) to determine the attribute. The determiner 40 (attribute determiner 44) determines the attribute of the place, and outputs the attribute information to the controller 30, and the controller 30 makes the storage 50 (place attribute information storage 53) store it (S410).

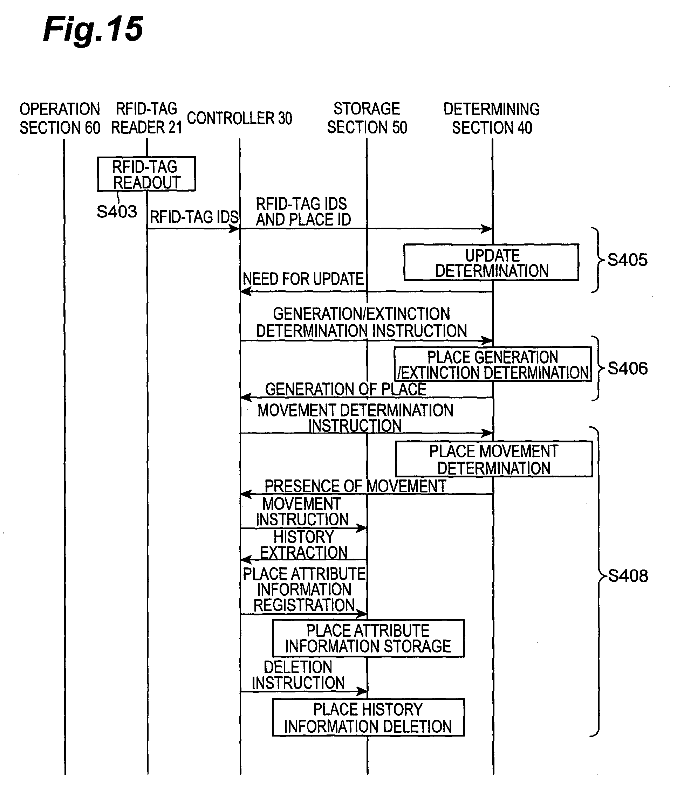

Next, the place movement process will be described. Fig. 15 is an operation sequence diagram of the processing. In this figure, S403-S405 are the same processes as in Fig. 14. Fig. 15 shows a case where the RFID-tag reader 21 read the RFID-tags.

The determiner 40 (update determiner 42) determines whether there was generation or extinction of a place, or a change of a place, and in this case it is determined there was generation of a place, and the controller 30 is notified of it (S406).

Receiving it, the controller 30 instructs the determiner 40 (place movement determiner 43) to determine whether there was movement. In the present example, the determiner 40 (place movement determiner 43) notifies the controller 30 of a result of a determination of movement being made, and the controller 30 extracts the history information from the storage 50 (place history storage 54) on the basis of the movement instruction, and registers the attribute name, thing attribute IDs, and associated service extracted, together with the RFID-tag IDs read by the RFID-tag reader 21, in the place attribute information storage 53. Then the history information extracted is erased from the place history storage 54 (S408).

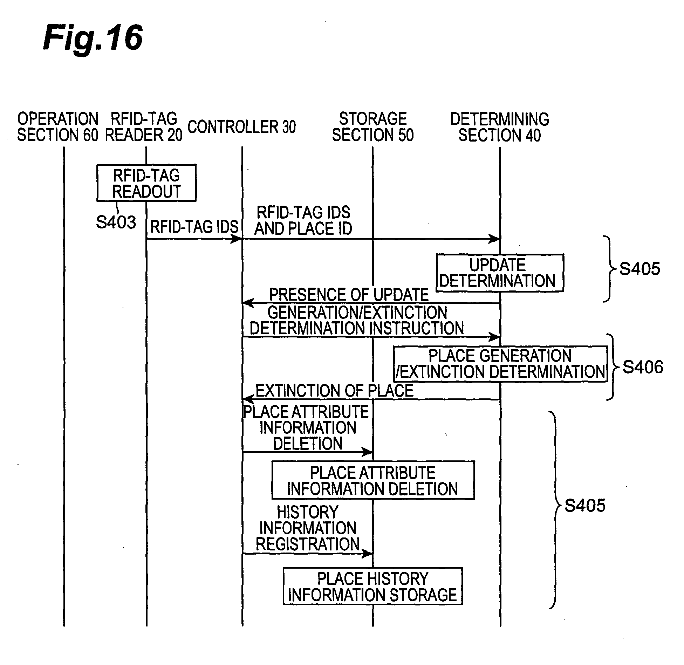

Next, the place extinction process will be described. Fig. 16 is an operation sequence diagram of the process. In this figure, S403-S405 are the same processes as in Fig. 14. Fig. 16 shows a case where the RFID-tag reader 20 read the RFID-tags.

The determiner 40 (place update determiner 42) determines whether there was generation or extinction of a place, or a change of a place, and in this case it is determined that there was extinction of a place, and the controller 30 is notified of it (S406).

Receiving it, the controller 30 erases the relevant place attribute information from the storage 50 (place attribute information storage 53) and stores the place history information into the storage 50 (place history storage 54).

Through these processes, the place management apparatus according to the present invention is able to execute the processes of generation of a place, movement of a place, and extinction of a place, and by performing the place movement process, the apparatus is able to implement the appropriate place management in addition to the simple processes of generation and extinction of a place.

In another potential embodiment, no space of interest is particularly defined, and a place is specified for each RFID-tag reader preliminarily installed, by the above-described techniques. In this case, the detection range of each RFID-tag reader is a space of interest.

**Claims**

1. A place management apparatus comprising:

   thing attribute storing means for storing attribute information and an RFID-tag ID of each thing in correspondence;
   reception controlling means for receiving IDs of RFID-tags attached to respective things located in a spatial area of a predetermined place; and
   attribute determining means for determining an attribute of the place on the basis of the RFID-tag IDs received by the reception controlling means and the attribute information and the RFID-tag ID of each thing stored in the thing attribute storing means.

2. The place management apparatus according to Claim 1, further comprising attribute inference rule information storing means for storing attribute inference rule information for determining the attribute of the place from the thing attribute information,
   wherein the attribute determining means determines the attribute of the place on the basis of the thing attribute information stored in the thing attribute storing means and the attribute inference rule information stored in the attribute inference rule information storing means.

3. The place management apparatus according to Claim 1 or 2, further comprising:

   place attribute information storing means for storing the attribute information of the place; and
   updating means for comparing the attribute information of the place stored in the place attribute information storing means with current place attribute information received by the reception controlling means and for updating the place attribute information stored in the place attribute information storing means if it can be determined that there was a change in the attribute of the place.

**4.** The place management apparatus according to Claim 3, wherein the updating means determines that there was a change in the attribute of the place, if there is a change in the RFID-tags located in the spatial area of the place, received by the reception controlling means, or if there is a change in attributes of the things stored in the RFID-tags.

**5.** The place management apparatus according to any one of Claims 1 to 4, wherein the attribute determining means detects a commonality among attributes of things stored in the thing attribute information storing means, thereby determining the attribute of the place.

**6.** The place management apparatus according to any one of Claims 1 to 5, further comprising place movement determining means for determining a movement of a thing from a predetermined place to another place, based on the RFID-tag IDs received by the reception controlling means.

**7.** The place management apparatus according to Claim 6, further comprising place history storing means for storing attribute information of a previously extinct place,
    wherein the place movement determining means further determines that there was a movement of the place, if the place movement determining means determines that there was coincidence between the RFID-tag IDs received by the reception controlling means and the RFID-tag IDs in the attribute information of the place stored in the place history storing means.

**8.** The place management apparatus according to any one of Claims 1 to 7, further comprising attribute inference rule learning means for automatically generating a place attribute inference rule by learning from a combination of the attribute information of each of the things located in the spatial area of the predetermined place and the attribute information of the place.

**9.** The place management apparatus according to Claim 8, wherein the attribute inference rule learning means specifies a relationship between the attribute information of each of the things located in the spatial area of the predetermined place and the attribute information of the place by learning.

**10.** The place management apparatus according to Claim 9, wherein the attribute determining means determines an attribute of a place with a highest relationship with a thing set consisting of the things, using the relationship specified by the attribute inference rule learning means.

**11.** The place management apparatus according to any one of Claims 1 to 10, wherein the thing attribute storing means stores an ontology to define a relation between terms described as the thing attribute information.

**12.** A place management method comprising:

    a receiving step of receiving IDs of RFID-tags attached to respective things located in a spatial area of a predetermined place;
    a reading step of reading attribute information and an RFID-tag ID of each thing stored in correspondence; and
    a determining step of determining an attribute of the place on the basis of the received RFID-tag IDs and the attribute information and the RFID-tag ID read.

# Fig.1

```
┌─────────────────────────────────────────────────────────────────┐
│  ┌───────────────────────────┐      ┌───────────────────────────┐ │
│  │ ┌──────────┐ ┌──────────┐ │      │ ┌──────────┐ ┌──────────┐ │ │
│  │ │COMMODITY │ │COMMODITY │ │      │ │COMMODITY │ │COMMODITY │ │ │
│  │ │    A     │ │    B     │ │~31   │ │    D     │ │    E     │ │~32│
│  │ │ ┌─────┐  │ │ ┌─────┐  │ │      │ │ ┌─────┐  │ │ ┌─────┐  │ │ │
│  │ │ │ TAG │  │ │ │ TAG │  │ │      │ │ │ TAG │  │ │ │ TAG │  │ │ │
│  │ │ └─────┘  │ │ └─────┘  │ │      │ │ └─────┘  │ │ └─────┘  │ │ │
│  │ └──────────┘ └──────────┘ │      │ └──────────┘ └──────────┘ │ │
│  │   ┌──────────┐            │      │                           │ │
│  │   │COMMODITY │            │      │                           │ │
│  │   │    C     │            │      │                           │ │
│  │   │ ┌─────┐  │            │      │                           │ │
│  │   │ │ TAG │  │            │      │                           │ │
│  │   │ └─────┘  │            │      │                           │ │
│  │   └──────────┘            │      │                           │ │
│  └───────────────────────────┘      └───────────────────────────┘ │
│                                                                   │
│         ))) ))) )))                        ))) ))) )))            │
│                                                                   │
│      ┌──────────┐                       ┌──────────┐             │
│      │ RFID-TAG │~20                    │ RFID-TAG │~20          │
│      │ READER A │                       │ READER B │             │
│      └──────────┘                       └──────────┘             │
│      ┌──────────┐                       ┌──────────┐             │
│      │          │~100                   │          │~100         │
│      │          │                       │          │             │
│      │ ┌──────┐ │                       │ ┌──────┐ │             │
│      │ │DISPLAY│~70                     │ │DISPLAY│~70           │
│      │ └──────┘ │                       │ └──────┘ │             │
│      └──────────┘                       └──────────┘             │
└─────────────────────────────────────────────────────────────────┘
```

# Fig.2

(a)

33

PERSONAL COMPUTER  DOCUMENT

TAG  TAG

HIS OWN SEAT

RFID-TAG READER A

34

MEETING CORNER

RFID-TAG READER B

(b)

33

DOCUMENT

PERSONAL COMPUTER

TAG

HIS OWN SEAT

RFID-TAG READER A

34

MEETING CORNER

RFID-TAG READER B

(c)

33

HIS OWN SEAT

RFID-TAG READER A

34

PERSONAL COMPUTER  DOCUMENT

TAG  TAG

MEETING CORNER

RFID-TAG READER B

# Fig.3

COMMODITY
RFID-TAG
10

COMMODITY
RFID-TAG
11

COMMODITY
RFID-TAG
12

COMMODITY
RFID-TAG
13

20 — RFID-TAG READER

RFID-TAG READER — 21

50
STORAGE SECTION

30
CONTROLLER

40
DETERMINING SECTION

51 — COMMODITY ATTRIBUTE INFORMATION STORAGE

52 — ATTRIBUTE INFERENCE RULE STORAGE

53 — PLACE ATTRIBUTE INFORMATION STORAGE

54 — PLACE HISTORY STORAGE

OPERATION SECTION
60

DISPLAY
70

80
LEARNING SECTION

81 — RELATIONSHIP LEARNING SECTION

RELEVANT TAG DETERMINER — 41

UPDATE DETERMINER — 42

PLACE MOVEMENT DETERMINER — 43

ATTRIBUTE DETERMINER — 44

100

EP 1 577 810 A1

# Fig.4

(a)

PLACE CORRESPONDING
TO PLACE ID "F001"

RFID-TAG ID
0001

RFID-TAG ID
0002

RFID-TAG ID
0003

PLACE CORRESPONDING
TO PLACE ID "F002"

RFID-TAG ID
0004

RFID-TAG READER
8001

RFID-TAG READER
8002

(b)

PLACE ATTRIBUTE INFORMATION

| PLACE ID | DETECTING READER ID | CONSTITUTIVE THING ID |
|----------|---------------------|------------------------|
| F001 | 8001 | 001 002 004 |
| F002 | 8002 | |

53

(c)

| RFID-TAG ID | COMMODITY NAME | CATEGORY | PRICE | EXPIRATION DATE | DETECTING READER ID |
|-------------|----------------|----------|-------|-----------------|---------------------|
| 0001 | PACIFIC SAURY | FRESH FISH | 100 | 2004.1.3 | 8001 |
| 0002 | DRIED SARDINES | FRESH FISH | 200 | 2004.1.5 | 8001 |
| 0003 | PACIFIC SAURY | FRESH FISH | 100 | 2004.1.4 | |
| 0004 | SMELT | FRESH FISH | 150 | 2004.1.3 | 8001 |

# Fig.5

```
                    ┌─────────────┐
                    │    START    │
                    └──────┬──────┘
                           ↓
         ┌─────────────────────────────────┐
S201 ────┤        RFID-TAG READOUT          │
         └─────────────────────────────────┘
                           ↓
         ┌─────────────────────────────────┐
S202 ────┤       INPUT OF COMMODITY         │
         │      ATTRIBUTE INFORMATION       │
         └─────────────────────────────────┘
                           ↓
         ┌─────────────────────────────────┐
S203 ────┤     STORAGE OF COMMODITY         │
         │      ATTRIBUTE INFORMATION       │
         └─────────────────────────────────┘
                           ↓
                    ┌─────────────┐
                    │     END     │
                    └─────────────┘
```

# Fig.6

```
           ┌─────────────┐
           │    START    │
           └─────────────┘
                  │
                  ▼
S301 ──┌──────────────────────────┐
       │ ACQUISITION OFREADER ID   │
       └──────────────────────────┘
                  │
                  ▼
S302 ──┌──────────────────────────┐
       │     REGISTRATION OF       │
       │   READER ID OF INTEREST   │
       └──────────────────────────┘
                  │
                  ▼
           ┌─────────────┐
           │     END     │
           └─────────────┘
```

**Fig.7**

```
                          ( START )
                              │
                              ▼
         ┌─────────────────────────────────────┐
   S401─ │ RFID-TAG RELATED INFORMATION         │
         │         STORING PROCESS              │
         └─────────────────────────────────────┘
                              │
                              ▼
         ┌─────────────────────────────────────┐
   S402─ │        FOCUSED PLACE                 │
         │      REGISTERING PROCESS             │
         └─────────────────────────────────────┘
                              │
                              ▼
         ┌─────────────────────────────────────┐◄──────┐
   S403─ │           RFID-TAG                   │       │
         │       DETECTING PROCESS              │       │
         └─────────────────────────────────────┘       │
                              │                         │
                              ▼                         │
         ┌─────────────────────────────────────┐       │
   S404─ │         RELEVANT TAG                 │       │
         │      DETERMINING PROCESS             │       │
         └─────────────────────────────────────┘       │
                              │                         │
                              ▼                         │
         ┌─────────────────────────────────────┐       │
   S405─ │       ATTRIBUTE UPDATE               │       │
         │      DETERMINING PROCESS             │       │
         └─────────────────────────────────────┘       │
                              │                         │
                              ▼                         │
              ◇ IS UPDATE NEEDED? ◇────────────NO───────┘
                              │
                             YES
                              ▼
         ┌─────────────────────────────────────┐
   S406─ │  PLACE GENERATION/EXTINCTION         │
         │      DETERMINING PROCESS             │
         └─────────────────────────────────────┘
                              │
                              ▼
GENERATION OF PLACE   ◇ GENERATION OR EXTINCTION? ◇   EXTINCTION OF PLACE
          │                  │                              │
          ▼            CHANGE OF PLACE                      │
  ┌──────────────────┐       │                              │
S407─│ PLACE MOVEMENT │      │                              │
  │DETERMINING PROCESS│      │                              │
  └──────────────────┘       │                              │
          │                  │                              │
          ▼                  │                              │
  ◇ MOVEMENT OCCURRED? ◇──NO─┤                              │
          │                  │                              │
         YES                 │                              │
          ▼                  ▼                              ▼
  ┌──────────────┐  ┌──────────────────┐  ┌──────────────────┐
  │PLACE MOVEMENT│  │ PLACE ATTRIBUTE  │  │ PLACE EXTINCTION │
  │   PROCESS    │  │SPECIFYING PROCESS│  │     PROCESS      │
  └──────────────┘  └──────────────────┘  └──────────────────┘
          │                  │                      │
        S408               S410                   S409
          │                  │                      │
          └──────────────────┼──────────────────────┘
                             ▼
                          ( END )
```

# *Fig.8*

| RFID-TAG ID | DETECTING READER ID | BASIC CONCEPT | EXPIRATION DATE | ROLE CONCEPT | PRICE | POSSESSION CONCEPT |
|---|---|---|---|---|---|---|
| 0001 | 8001 | PACIFIC SAURY | 2005/1/10 | COMMODITY | ¥100 | YAMADA |
| 0002 | 8002 | DRIED SARDINES | 2005/1/10 | SALE COMMODITY | ¥150 | YOSHIDA |

23

# Fig.9

| PLACE ID | CORRESPONDING READER ID | ATTRIBUTE NAME | CONSTITUTIVE THING ID | ASSOCIATED SERVICE |
|---|---|---|---|---|
| F001 | 8001 | | | |
| F002 | 8002 | | | |

*Fig.10*

| PLACE ID | CORRESPONDING READER ID | ATTRIBUTE NAME | CONSTITUTIVE THING ID | ASSOCIATED SERVICE |
|---|---|---|---|---|
| F001 | 8001 | FRESH FISH SALESPLACE | 「0001」、「0002」、 「0003」、「0004」 | |
| F002 | 8002 | | | |

# Fig.11

| PLACE ID | CORRESPONDING READER ID | ATTRIBUTE NAME | CONSTITUTIVE THING ID | ASSOCIATED SERVICE |
|----------|-------------------------|----------------|-----------------------|--------------------|
| F001 | 8001 | FRESH FISH SALESPLACE | 「0001」、「0002」、「0003」、「0004」 | ISSUE OF COUPON |
| F002 | 8002 | | | |

# Fig.12

| PLACE ID | ATTRIBUTE NAME | CONSTITUTIVE THING ID | ASSOCIATED SERVICE |
|----------|----------------|-----------------------|--------------------|
| F001 | FRESH FISH SALESPLACE | 「0001」、「0002」、「0003」、「0004」 | ISSUE OF COUPON |

## Fig.13

| PLACE ID | CORRESPONDING READER ID | ATTRIBUTE NAME | CONSTITUTIVE THING ID | ASSOCIATED SERVICE |
|---|---|---|---|---|
| F001 | 8001 | | | |
| F002 | 8002 | FRESH FISH SALESPLACE | 「0001」、「0002」、「0003」、「0004」 | ISSUE OF COUPON |

EP 1 577 810 A1

# Fig.14

```
OPERATION     RFID-TAG                    STORAGE          DETERMINING
SECTION 60    READER 20  CONTROLLER 30    SECTION 50       SECTION 40
```

RFID-TAG
READOUT

RFID-TAG IDS → RFID-TAG IDS

ATTRIBUTES OF COMMODITIES → ATTRIBUTES OF COMMODITIES      } S401

COMMODITY ATTRIBUTE INFORMATION STORAGE

READER →

PLACE ATTRIBUTE INFORMATION STORAGE      } S402

S403

RFID-TAG READOUT

RFID-TAG IDS → RFID-TAG IDS AND PLACE ID

UPDATE DETERMINATION      } S405

PRESENCE OF UPDATE

GENERATION/EXTINCTION DETERMINATION INSTRUCTION

PLACE GENERATION /EXTINCTION DETERMINATION      } S406

CHANGE IN CONTENTS OF PLACE

ATTRIBUTE DETERMINATION INSTRUCTION

PLACE ATTRIBUTE INFORMATION NOTIFICATION      PLACE ATTRIBUTE DETERMINATION

PLACE ATTRIBUTE INFORMATION REGISTRATION      } S410

PLACE ATTRIBUTE INFORMATION STORAGE

EP 1 577 810 A1

# Fig.15

| OPERATION SECTION 60 | RFID-TAG READER 21 | CONTROLLER 30 | STORAGE SECTION 50 | DETERMINING SECTION 40 |

RFID-TAG READOUT

S403 | RFID-TAG IDS

RFID-TAG IDS AND PLACE ID

UPDATE DETERMINATION } S405

NEED FOR UPDATE

GENERATION/EXTINCTION DETERMINATION INSTRUCTION

PLACE GENERATION /EXTINCTION DETERMINATION } S406

GENERATION OF PLACE

MOVEMENT DETERMINATION INSTRUCTION

PLACE MOVEMENT DETERMINATION

PRESENCE OF MOVEMENT

MOVEMENT INSTRUCTION

HISTORY EXTRACTION

PLACE ATTRIBUTE INFORMATION REGISTRATION

PLACE ATTRIBUTE INFORMATION STORAGE

DELETION INSTRUCTION

PLACE HISTORY INFORMATION DELETION

} S408

30

# Fig.16

OPERATION    RFID-TAG
SECTION 60   READER 20   CONTROLLER 30          STORAGE        DETERMINING
                                                SECTION 50     SECTION 40

RFID-TAG
READOUT

S403      RFID-TAG IDS

RFID-TAG IDS
AND PLACE ID

UPDATE
DETERMINATION                S405

PRESENCE OF UPDATE
GENERATION/EXTINCTION
DETERMINATION INSTRUCTION

PLACE GENERATION
/EXTINCTION DETERMINATION    S406

EXTINCTION OF PLACE

PLACE ATTRIBUTE
INFORMATION
DELETION

PLACE ATTRIBUTE
INFORMATION DELETION

HISTORY
INFORMATION
REGISTRATION                                                    S405

PLACE HISTORY
INFORMATION STORAGE

# Fig.17

| PLACE ID | CORRESPONDING READER ID | ATTRIBUTE NAME | CONSTITUTIVE THING ID | ASSOCIATED SERVICE |
|----------|-------------------------|----------------|------------------------|---------------------|
| F001 | 8001 | | | |
| F002 | 8002 | | | |
| F003 | 8001 * 8002 | | | |

## Fig.18

| ATTRIBUTE OF PLACE | THING ATTRIBUTE | RELATIONSHIP |
|---|---|---|
| WORKPLACE | PERSONAL COMPUTER | 0.8 |
| WORKPLACE | DOCUMENT | 0.7 |
| WORKPLACE | COMMODITY | 0.1 |
| WORKPLACE | CASH REGISTER | 0.1 |
| SALESPLACE | PERSONAL COMPUTER | 0.1 |
| SALESPLACE | DOCUMENT | 0.1 |
| SALESPLACE | COMMODITY | 0.9 |
| SALESPLACE | CASH REGISTER | 0.6 |

# Fig.19

BASIC CONCEPT

TERM

PENCIL

ERASER

WRITING TOOL

is-a RELATION

ROLE CONCEPT

SALE COMMODITY

COMMODITY

POSSESSION CONCEPT

YAMADA

YOSHIDA

COMPANY A

*Fig.20*

| RFID-TAG ID | BASIC CONCEPT | ROLE CONCEPT | POSSESSION CONCEPT |
|---|---|---|---|
| 0001 | PENCIL | COMMODITY | YAMADA |
| 0002 | ERASER | SALE COMMODITY | YOSHIDA |

35

# Fig.21

| TERM | ATTRIBUTE |
|---|---|
| COMMODITIES | PRICE |
| FOODS | EXPIRATION DATE |

European Patent
Office

**EUROPEAN SEARCH REPORT**

Application Number

EP 05 00 4744

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/222762 A1 (BEIGL MICHAEL ET AL) 4 December 2003 (2003-12-04) * page 2, paragraph 28 * * page 2, paragraph 31 - page 3, paragraph 34 * * page 6, paragraph 66 - page 9, paragraph 90 * * figures 1,7,8 * | 1-12 | G06F17/60 G06K7/08 |
| X | US 2001/049846 A1 (GUZZI BRIAN DANIEL ET AL) 13 December 2001 (2001-12-13) * page 2, paragraph 32 - page 3, paragraph 33 * * page 3, paragraph 36 * * page 4, paragraph 38 - paragraph 41 * * page 5, paragraph 47 - page 6, paragraph 49 * * page 7, paragraph 61 - page 8, paragraph 69 * * page 9, paragraph 73 - page 10, paragraph 83 * * figures 2-6,8,9 * | 1-12 | |
| P,X | WO 2004/055256 A (UNILEVER N.V; UNILEVER PLC; HINDUSTAN LEVER LIMITED; BIRKER, PAUL, JOH) 1 July 2004 (2004-07-01) * page 2, line 7 - page 10, line 30 * * figure 1 * | 1-12 | TECHNICAL FIELDS SEARCHED (Int.Cl.7) G06F G07C G07G G06K |
| A | GB 2 375 407 A (* INTERNATIONAL COMPUTERS LIMITED; * FUJITSU SERVICES LIMITED) 13 November 2002 (2002-11-13) * page 3 - page 8 * * figures * | 1-12 | |

-/--

The present search report has been drawn up for all claims

| Place of search | Date of completion of the search | Examiner |
|---|---|---|
| The Hague | 19 July 2005 | Rachkov, V |

EPO FORM 1503 03.82 (P04C01)

**European Patent Office**

## EUROPEAN SEARCH REPORT

Application Number

EP 05 00 4744

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2003/216969 A1 (BAUER DONALD G ET AL) 20 November 2003 (2003-11-20) * page 3, paragraph 34 - page 22, paragraph 219 * * figure 2 * ----- | 1-12 | |
| A | US 2002/038267 A1 (CAN NECMETTIN ET AL) 28 March 2002 (2002-03-28) * page 3, column 53 - page 8, column 99 * ----- | 1-12 | |

TECHNICAL FIELDS
SEARCHED (Int.Cl.7)

The present search report has been drawn up for all claims

| Place of search | Date of completion of the search | Examiner |
|---|---|---|
| The Hague | 19 July 2005 | Rachkov, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 00 4744

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2005

| Patent document cited in search report | | Publication date | Patent family member(s) | | Publication date |
|---|---|---|---|---|---|
| US 2003222762 | A1 | 04-12-2003 | AU | 2003250824 A1 | 19-12-2003 |
| | | | WO | 03102864 A2 | 11-12-2003 |
| | | | EP | 1518206 A2 | 30-03-2005 |
| US 2001049846 | A1 | 13-12-2001 | AU | 6835001 A | 24-12-2001 |
| | | | CA | 2408950 A1 | 20-12-2001 |
| | | | EP | 1290260 A2 | 12-03-2003 |
| | | | JP | 2004503853 T | 05-02-2004 |
| | | | WO | 0196645 A2 | 20-12-2001 |
| WO 2004055256 | A | 01-07-2004 | AU | 2003283392 A1 | 09-07-2004 |
| | | | WO | 2004055256 A1 | 01-07-2004 |
| GB 2375407 | A | 13-11-2002 | NONE | | |
| US 2003216969 | A1 | 20-11-2003 | AU | 2003209188 A1 | 30-07-2003 |
| | | | CA | 2473136 A1 | 24-07-2003 |
| | | | CA | 2474254 A1 | 31-07-2003 |
| | | | EP | 1470613 A2 | 27-10-2004 |
| | | | EP | 1468473 A2 | 20-10-2004 |
| | | | JP | 2005515947 T | 02-06-2005 |
| | | | WO | 03061060 A2 | 24-07-2003 |
| | | | WO | 03061366 A2 | 31-07-2003 |
| | | | US | 2003174099 A1 | 18-09-2003 |
| US 2002038267 | A1 | 28-03-2002 | AU | 8867801 A | 22-03-2002 |
| | | | CA | 2419952 A1 | 14-03-2002 |
| | | | CN | 1531715 A | 22-09-2004 |
| | | | EP | 1342203 A2 | 10-09-2003 |
| | | | JP | 2004531437 T | 14-10-2004 |
| | | | WO | 0221424 A2 | 14-03-2002 |

EPO FORM P0459

For more details about this annex : see Official Journal of the European Patent Office, No. 12/82